# EUROPÄISCHE PATENTANMELDUNG

(11) **EP 3 098 025 A1**
(43) Veröffentlichungstag der Anmeldung: **30.11.2016**
(21) Anmeldenummer: 15169753.9
(22) Anmeldetag: 28.05.2015
(51) Int. Cl.: B23Q 11/08, B25J 15/04

(54) **ABDECKEINRICHTUNG FÜR EINE WERKZEUGABLAGESTATION**

(71) Anmelder: Stäubli Tec-Systems GmbH, 95448 Bayreuth (DE)
(72) Erfinder: Kohler, Wolfgang, 91257 Pegnitz (DE); Schindler, Markus, 95469 Speichersdorf (DE)
(74) Vertreter: Pfenning, Meinig & Partner mbB

(57) **Zusammenfassung**

Die Erfindung betrifft eine Abdeckeinrichtung (1) für eine Werkzeugablagestation. Die Abdeckeinrichtung (1) umfasst eine Abdeckung (2) sowie eine Vorrichtung (3) zum Bewegen der Abdeckung. Die Vorrichtung (3) zum Bewegen der Abdeckung (2) weist eine Schiene (11) und einen durch die Schiene (11) geführten und entlang der Schiene (11) verschiebbaren ersten Mitnehmer (10) auf, der mit der Abdeckung (2) verbunden ist, wobei die Abdeckeinrichtung (1) durch ein Verschieben des ersten Mitnehmers (10) in eine erste Richtung (34) entlang der Schiene (11) in eine geöffnete Stellung überführbar ist und wobei die Abdeckeinrichtung (1) durch ein Verschieben des ersten Mitnehmers (10) in eine der ersten Richtung (34) entgegengesetzte zweite Richtung (35) entlang der Schiene (11) in eine abgedeckte Stellung überführbar ist. Die Vorrichtung (3) zum Bewegen der Abdeckung (2) ist derart ausgebildet, dass das Verschieben des ersten Mitnehmers (10) eine zumindest teilweise translatorische Bewegung der Abdeckung (2) bewirkt.

## Beschreibung

Die Erfindung betrifft eine Abdeckeinrichtung für eine Werkzeugablagestation gemäß dem Oberbegriff des Anspruchs 1. Außerdem betrifft die Erfindung eine Werkzeugablagestation.

Industrieroboter für industrielle Fertigungs- und Bearbeitungsprozesse sind oft mit unterschiedlichen Werkzeugen bestückbar. Werden diese Werkzeuge nicht gebraucht, werden sie in Werkzeugablagestationen aufbewahrt, aus denen sie durch den Industrieroboter bei Bedarf automatisch entnommen und in die sie anschließend automatisch abgelegt werden können. Aus dem Stand der Technik sind Abdeckeinrichtungen von Werkzeugablagestationen für Industrieroboter bekannt. Diese Abdeckeinrichtungen dienen z. B. dazu, werkzeugseitige Öffnungen vor Schmutzeintrag zu schützen. Bekannte Abdeckeinrichtungen weisen eine Abdeckung auf, die schwenkbar mit der Werkzeugablagestation verbunden ist, wobei eine Überführung der Abdeckeinrichtung von einer abgedeckten in eine geöffnete Stellung oder umgekehrt typischerweise eine Schwenkbewegung der Abdeckung um einen relativ großen Winkel zwischen 120° und 130° beinhaltet. Zwar gewährleistet eine solche Abdeckeinrichtung einen zuverlässigen Schutz vor Schmutzeintrag, jedoch ist ein Öffnen und Schließen typischerweise mit relativ langen Taktzeiten verbunden.

Aufgabe der Erfindung ist es daher, eine Abdeckeinrichtung für eine Werkzeugablagestation bereitzustellen, welche die oben genannten Nachteile überwindet. Insbesondere besteht die Aufgabe der Erfindung darin, eine Abdeckeinrichtung zu schaffen, die möglichst effizient und möglichst schnell aus der geschlossenen Stellung in die geöffnete Stellung überführbar ist und umgekehrt.

Diese Aufgabe wird durch eine Abdeckeinrichtung für eine Werkzeugablagestation mit den Merkmalen des Hauptanspruchs gelöst. Vorteilhafte Weiterbildungen ergeben sich aus den Merkmalen der abhängigen Ansprüche und der Ausführungsbeispiele.

Die vorgeschlagene Abdeckeinrichtung umfasst eine Abdeckung sowie eine Vorrichtung zum Bewegen der Abdeckung. Die Vorrichtung zum Bewegen der Abdeckung weist eine Schiene und einen durch die Schiene geführten und gegenüber der Schiene verschiebbaren ersten Mitnehmer auf, der mit der Abdeckung verbunden ist, wobei die Abdeckeinrichtung durch ein Verschieben des ersten Mitnehmers in eine erste Richtung entlang der Schiene in eine geöffnete Stellung überführbar ist und wobei die Abdeckeinrichtung durch ein Verschieben des ersten Mitnehmers in eine der ersten Richtung entgegengesetzte zweite Richtung entlang der Schiene in eine abgedeckte Stellung überführbar ist. Die Vorrichtung zum Bewegen der Abdeckung ist derart ausgebildet, dass das Verschieben des ersten Mitnehmers entlang der Schiene eine zumindest teilweise translatorische Bewegung der Abdeckung bewirkt.

Durch die erfindungsgemäße Abdeckeinrichtung wird erreicht, dass die Abdeckung keine reine Schwenkbewegung vollführt. Die zumindest teilweise translatorische Bewegung der Abdeckung ist einerseits von Vorteil, da hierdurch ein schnelleres Öffnen und Schließen der Abdeckeinrichtung erreicht werden kann, was insbesondere bei Werkzeugablagestationen für Industrieroboter einen schnellen Werkzeugwechsel des Industrieroboters ermöglicht. Andererseits bringt die zumindest teilweise translatorische Bewegung der Abdeckung den Vorteil mit sich, dass das Öffnen und Schließen weniger Raum oberhalb der Abdeckung einnimmt, was ebenso einen schnelleren Werkzeugwechsel ermöglicht, da eine Werkzeugaufnahmevorrichtung des Industrieroboters somit vor oder während dem Öffnen der Abdeckeinrichtung nah an die Werkzeugablage herangeführt werden kann.

Der erste Mitnehmer kann eine Aussparung aufweisen, die durch ihre Form geeignet ist, die Schiene zu umschließen. Die Schiene kann in einer horizontalen Richtung ausgebildet sein, wodurch der erste Mitnehmer in horizontaler Richtung verschiebbar ist. Die Schiene kann derart ausgeführt sein, dass der erste Mitnehmer beim Verschieben eine gerade Bahn oder eine gekrümmte Bahn durchläuft.

Die Abdeckeinrichtung kann ein starr mit der Abdeckung verbundenes erstes Führungselement aufweisen, wobei die Abdeckung um eine von dem ersten Führungselement beabstandete Drehachse drehbar mit dem ersten Mitnehmer verbunden ist und wobei die Vorrichtung zum Bewegen der Abdeckung ein zweites Führungselement in Eingriff mit dem ersten Führungselement aufweist, wobei das erste und das zweite Führungselement derart ausgebildet und angeordnet sind, dass das Verschieben des ersten Mitnehmers zusätzlich zur zumindest teilweise translatorischen Bewegung der Abdeckung eine Rotationsbewegung der Abdeckung um die Drehachse bewirkt. Typischerweise ist das zweite Führungselement relativ zur Schiene unbeweglich angeordnet und die Bewegung des starr mit der Abdeckung verbundenen ersten Führungselements wird durch das zweite Führungselement geführt.

Das zweite Führungselement kann als Nut ausgebildet sein. Eine Nut eignet sich z. B. für eine Führung des ersten Führungselements von zwei gegenüberliegenden Seiten, wodurch eine sichere Führung insbesondere bei einem schnellen Öffnungs- oder Schließvorgang der Abdeckeinrichtung erreicht werden kann. Das erste Führungselement kann als Nase ausgebildet sein. Wenn das zweite Führungselement als Nut ausgebildet ist, kann diese Nase derart in der Nut aufgenommen sein oder in die Nut hineinragen, dass die Nase beim Öffnen und Schließen der Abdeckeinrichtung durch die Nut geführt wird. Ebenso ist es denkbar, dass umgekehrt das starr mit der Abdeckung verbundene erste Führungselement als Nut und das relativ zur Schiene unbeweglich angeordnete zweite Führungselement als Nase ausgebildet ist. In beiden Fällen wird die Bewegung der Abdeckung beim Öffnen und Schließen der Abdeckeinrichtung durch die Form der Nut bestimmt.

Eine weitere Ausführung sieht vor, dass das erste Führungselement als Rolle ausgebildet ist. Eine Rolle ist geeignet, auf einer Fläche des zweiten Führungselements abzurollen. Hierdurch kann ein mechanischer Verschleiß des ersten und des zweiten Führungselements minimiert werden.

Die Rotationsbewegung kann z. B. dadurch bewirkt werden, dass das zweite das erste Führungselement oder das erste das zweite Führungselement so führt, dass die entlang der Schiene bewegliche Drehachse und das starr mit der Abdeckung verbundene erste Führungselement während eines Öffnungs- oder Schließvorgangs der Abdeckeinrichtung wenigstens abschnittweise unterschiedlich lange Wegstrecken durchlaufen.

Beispielsweise kann der erste Mitnehmer relativ zur Schiene derart verschiebbar sein, dass die relativ zum ersten Mitnehmer fest angeordnete Drehachse beim Öffnen und Schließen eine durch die Schiene geführte geradlinige Translationsbewegung vollführt. Das erste und das zweite Führungselement können dann derart ausgebildet sein, dass das von der Drehachse beabstandete und starr an der Abdeckung angeordnete erste Führungselement beim Verschieben des ersten Mitnehmers entlang der Schiene durch das zweite Führungselement auf einer wenigstens abschnittweise gekrümmten Bahn geführt wird. Alternativ können das erste und das zweite Führungselement auch derart ausgebildet sein, dass das erste Führungselement beim Verschieben des ersten Mitnehmers entlang der Schiene durch das zweite Führungselement auf einer geradlinigen Bahn geführt wird, die jedoch mit der Schiene einen von 180 Grad verschiedenen Winkel einschließt.

Normalerweise ist die Abdeckung plattenartig ausgebildet. Die Drehachse kann dann parallel zu einer durch die plattenartige Abdeckung definierten Ebene ausgerichtet sein. Die Drehachse kann in einer horizontalen Richtung und dabei senkrecht zur ersten und zweiten Richtung orientiert sein.

Es kann vorgesehen sein, dass die Abdeckung während des Öffnungsvorgangs der Abdeckeinrichtung zunächst eine Kombination aus Rotations- und Translationsbewegung und anschließend eine reine Translationsbewegung vollführt. Eine derartige Abfolge kann einerseits ein sicheres Abdecken von Werkzeugen in der abgedeckten Stellung der Abdeckeinrichtung und andererseits ein schnelles Öffnen der Abdeckeinrichtung ermöglichen.

Zweckmäßigerweise weist die Schiene einen sich entlang einer Längsrichtung der Schiene erstreckenden Hohlraum und einen in diesem geführten und entlang der Längsrichtung der Schiene verschiebbaren zweiten Mitnehmer auf, wobei der erste Mitnehmer und der zweite Mitnehmer derart gekoppelt sind, dass das Verschieben des zweiten Mitnehmers das Verschieben des ersten Mitnehmers bewirkt. Somit kann ein Öffnen und Schließen der Abdeckeinrichtung dadurch erreicht werden, dass der zweite Mitnehmer angetrieben wird.

Zweckmäßigerweise weist die Schiene mindestens einen Druckluftanschluss zum Beaufschlagen des Hohlraumes mit einem Überdruck oder mit einem Unterdruck auf, wobei der Hohlraum und der zweite Mitnehmer derart ausgebildet sind und der zweite Mitnehmer derart im Hohlraum geführt ist, dass ein Beaufschlagen des Hohlraumes mit einem Überdruck oder mit einem Unterdruck über den Druckluftanschluss ein Verschieben des zweiten Mitnehmers innerhalb des Hohlraumes bewirkt, und zwar entlang der Schiene.

Zum Beispiel kann an zwei gegenüberliegenden Enden der Schiene jeweils ein Druckluftanschluss vorgesehen sein. Ein Anlegen eines Überdruckes oder eines Unterdruckes an einen der Druckluftanschlüsse führt dann zum Verschieben des zweiten Mitnehmers, was bei einer Kopplung der Bewegungen des ersten und des zweiten Mitnehmers in einem Verschieben des ersten Mitnehmers resultieren kann. Somit kann das Öffnen oder Schließen der Abdeckeinrichtung mittels Druckluft angetrieben werden.

Der erste Mitnehmer und der zweite Mitnehmer können derart ausgebildet sein, dass der erste Mitnehmer und der zweite Mitnehmer über eine magnetische Kraft gekoppelt sind oder koppelbar sind. Z. B. kann der erste und/oder der zweite Mitnehmer einen Permanentmagneten umfassen oder an dem ersten und/oder dem zweiten Mitnehmer kann ein Permanentmagnet fest angeordnet sein. Alternativ oder zusätzlich kann der erste und/oder der zweite Mitnehmer einen Elektromagneten umfassen oder an dem ersten und/oder an dem zweiten Mitnehmer kann ein Elektromagnet fest angeordnet sein.

Es kann etwa durch eine magnetische Anziehung erreicht werden, dass das Verschieben des ersten Mitnehmers in dem Verschieben des zweiten Mitnehmers resultiert, wenn der Abstand zwischen dem ersten und zweiten Mitnehmer entlang der ersten Richtung hinreichend gering ist. Die Bewegungen des ersten und zweiten Mitnehmers können entkoppelt sein, wenn der Abstand zwischen dem ersten und zweiten Mitnehmer entlang der ersten Richtung hinreichend groß ist.

Wenn die Bewegungen des ersten und des zweiten Mitnehmers gekoppelt sind, weist die magnetische Anziehung zwischen dem ersten und dem zweiten Mitnehmer vorzugsweise eine Anziehungskraft von mindestens 10 N und/oder höchstens 200 N, besonders vorzugsweise von mindestens 60 N und/oder höchstens 80 N, auf.

Die Bewegungen des ersten und des zweiten Mitnehmers können durch eine Krafteinwirkung auf den ersten Mitnehmer oder auf die Abdeckung entkoppelt werden. Trifft die Abdeckung beispielsweise während des Öffnens oder Schließens der Abdeckeinrichtung auf ein Hindernis, so dass das Verschieben des ersten Mitnehmers blockiert wird, kann der zweite Mitnehmer im Hohlraum der Schiene weiterbewegt werden, während der erste Mitnehmer auf der Schiene ruht. Somit kann ein durch eine Kollision zwischen der Abdeckung und dem Hindernis entstehender Schaden an der Abdeckeinrichtung begrenzt werden. Außerdem kann dadurch ein möglicher Schaden am Hindernis begrenzt werden. Nach einem Entfernen des Hindernisses können die Bewegungen des ersten und des zweiten Mitnehmers durch eine Annäherung des ersten und des zweiten Mitnehmers wieder in einen gekoppelten Zustand überführt werden.

Typischerweise ist die Schiene in Form eines Rohres mit rundem Querschnitt und der zweite Mitnehmer in Form eines Zylinders ausgeführt. Hierbei ist ein Außendurchmesser des zweiten Mitnehmers vorzugsweise geringer als ein

Innendurchmesser der Schiene, typischerweise nur geringfügig geringer.

Desweiteren kann die Abdeckeinrichtung mindestens einen Sensor aufweisen, der eingerichtet ist, mindestens eine Position des ersten Mitnehmers relativ zur Schiene zu erfassen.

Ein Erfassen der Position des ersten Mitnehmers ermöglicht beispielsweise eine automatisierte Erkennung, ob sich die Abdeckeinrichtung in der geöffneten Stellung oder in der abgedeckten Stellung befindet. Der mindestens eine Sensor kann beispielsweise eingerichtet sein, ein durch ein magnetisches Material des ersten Mitnehmers hervorgerufenes magnetisches Streufeld zu detektieren. Außerdem kann die Abdeckeinrichtung mindestens einen zweiten Sensor aufweisen, der eingerichtet ist, mindestens eine Position des zweiten Mitnehmers zu erfassen.

Die Erfindung betrifft außerdem eine Werkzeugablagestation mit mindestens einer Aufnahme zum Aufnehmen eines Werkzeugs, insbesondere zum Aufnehmen eines Werkzeugs durch einen Industrieroboter, und mit mindestens einer wie oben beschriebenen Abdeckeinrichtung.

Ein Ausführungsbeispiel der Erfindung wird nachfolgend anhand der Abbildungen beschrieben. Es zeigen
- Fig. 1: eine Seitenansicht einer Abdeckeinrichtung in einer geöffneten Stellung;
- Fig. 2: eine perspektivische Ansicht der Abdeckeinrichtung in der in Fig. 1 gezeigten geöffneten Stellung;
- Fig. 3: eine Seitenansicht der in den Figuren 1 und 2 gezeigten Abdeckeinrichtung, hier in einer teilweise geöffneten Stellung;
- Fig. 4: eine perspektivische Ansicht der Abdeckeinrichtung in der in Fig. 3 gezeigten teilweise geöffneten Stellung;
- Fig. 5: eine Seitenansicht der in den Figuren 1 bis 4 gezeigten Abdeckeinrichtung, hier in einer abgedeckten Stellung;
- Fig. 6: eine perspektivische Ansicht der Abdeckeinrichtung in der in Fig. 5 gezeigten abgedeckten Stellung;
- Fig. 7: eine Seitenansicht eines zweiten Führungselements der in den Figuren 1 bis 6 gezeigten Abdeckeinrichtung;
- Fig. 8: eine Explosionszeichnung einer Schiene, eines ersten und eines zweiten Mitnehmers der in den Figuren 1 bis 6 gezeigten Abdeckeinrichtung;
- Fig. 9: eine perspektivische Ansicht einer Halterung der in den Figuren 1 bis 8 gezeigten Abdeckeinrichtung; und
- Fig. 10: eine Seitenansicht der in den Figuren 1 bis 9 gezeigten Abdeckeinrichtung und ein Hindernis.

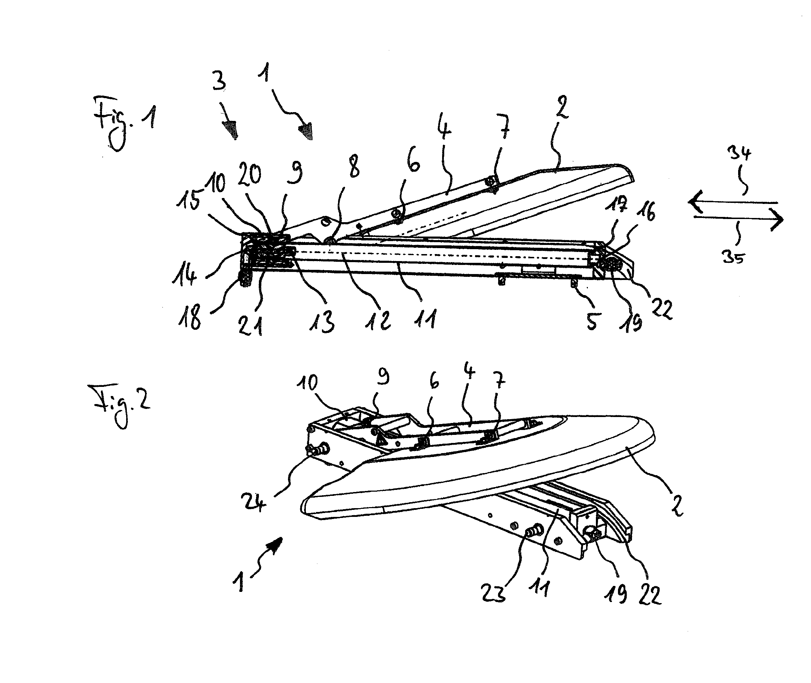

In Fig. 1 ist eine Abdeckeinrichtung 1 für eine Werkzeugablagestation in einer Seitenansicht gezeigt. Die Abdeckeinrichtung 1 umfasst eine Abdeckung 2, eine Vorrichtung 3 zum Bewegen der Abdeckung 2 sowie Befestigungsmittel 5 zum Befestigen der Abdeckeinrichtung 1 an einer Werkzeugablagestation.

Die Vorrichtung 3 umfasst eine Halterung 4, an welcher die Abdeckung 2 mittels Schraubverbindungen 6, 7 befestigt ist.

Die Vorrichtung 3 umfasst ferner einen ersten Mitnehmer 10. Die Halterung 4 ist um eine horizontale Drehachse 9 drehbar mit dem ersten Mitnehmer 10 verbunden. Der erste Mitnehmer 10 ist wird auf einer Schiene 11 geführt, die in Form eines Rohres mit rundem Querschnitt ausgeführt und aus Edelstahl gefertigt ist. Eine Längsrichtung der Schiene 11 ist hier in horizontaler Richtung orientiert. Der erste Mitnehmer 10 ist entlang der Längsrichtung der Schiene 11 verschiebbar. Innerhalb eines Hohlraums 12 der Schiene 11 wird ein zweiter Mitnehmer 13 geführt, der ebenfalls in der horizontalen Richtung verschiebbar ist. Der Hohlraum 12 ist im Inneren der Schiene 11 angeordnet und wird von der Schiene 11 umschlossen. Der Hohlraum erstreckt sich entlang der Längsrichtung der Schiene 11.

An einem ersten Ende 14 der Schiene 11 ist ein erster Anschlag 15 ausgebildet, der eine Verschiebung des ersten Mitnehmers 10 und des zweiten Mitnehmers 13 in eine erste Richtung 34 entlang der Schiene 11 begrenzt. In der in Fig. 1 gezeigten geöffneten Stellung der Abdeckeinrichtung 1 ist sowohl der erste Mitnehmer 10 als auch der zweite Mitnehmer 13 in Kontakt mit dem ersten Anschlag 15, so dass der erste Mitnehmer 10 und der zweite Mitnehmer 13 lediglich in eine der ersten Richtung 34 entgegengesetzte zweite Richtung 35 entlang der Schiene 11 verschiebbar sind. An einem zweiten Ende 16 der Schiene 11 ist ein desweiteren ein zweiter Anschlag 17 ausgebildet. Der zweite Anschlag 17 begrenzt die Bewegung des ersten Mitnehmers 10 und des zweiten Mitnehmers entlang der Schiene 11 in der zweiten Richtung 35.

Der Hohlraum 12 ist in den Bereichen des ersten Endes 14 der Schiene 11 und des zweiten Endes 16 der Schiene 11 über einen ersten Druckluftanschluss 18 und über einen zweiten Druckluftanschluss 19 jeweils mit einem Überdruck und/oder mit einem Unterdruck beaufschlagbar. Die Druckluftanschlüsse 18, 19 sind vorgesehen, damit ein Verschieben des zweiten Mitnehmers 13 mittels Druckluft angetrieben werden kann. Z. B. ist der zweite Mitnehmer 13 durch Beaufschlagen des Hohlraumes 12 mit einem Überdruck über den zweiten Druckluftanschluss 19 innerhalb des Hohlraumes 12 in die erste Richtung 34 entlang der Schiene 11 verschiebbar. Entsprechend ist der zweite Mitnehmer 13 durch Beaufschlagen des Hohlraumes 12 mit einem Überdruck über den ersten Druckluftanschluss 18 innerhalb des Hohlraumes 12 in die zweite Richtung 35 entlang der Schiene 11 verschiebbar.

Der erste Mitnehmer 10 und der zweite Mitnehmer 13 umfassen jeweils einen Permanentmagneten 20, 21. Z. B. sind die Permanentmagneten 20, 21 in die Mitnehmer 10, 13 integriert oder an den Mitnehmern 10, 13 befestigt. Die Permanentmagneten 20, 21 sind derart ausgeführt, dass eine magnetische Anziehung zwischen dem ersten Mitnehmer 10 und dem zweiten Mitnehmer 13 die Bewegungen des ersten Mitnehmers 10 und des zweiten Mitnehmers 13 koppelt, so dass durch ein Verschieben des zweiten Mitnehmers 13 im Hohlraum 12 in einem Verschieben des ersten Mitnehmers 10 auf der Schiene 11 resultiert oder resultieren kann.

Die Vorrichtung 3 zum Bewegen der Abdeckung 2 umfasst ein erstes Führungselement 8 in Form von zwei Rollen, welche an der Halterung 4 befestigt sind und über die Halterung 4 starr mit der Abdeckung 2 verbunden sind. Das erste Führungselement 8 ist von der Drehachse 9 beabstandet, an der die Halterung drehbar mit dem ersten Mitnehmer 10 verbunden ist. Die Rollen 8 des ersten Führungselements sind parallel zur Drehachse 9 ausgerichtet.

Die Vorrichtung 3 zum Bewegen der Abdeckung 2 umfasst außerdem ein zweites Führungselement 22 zum Führen des ersten Führungselements 8. Dieses zweite Führungselement 22 wird gebildet durch zwei zur Schiene 11 hin offene Nuten in zwei seitlich zur Schiene 11 und relativ zur Schiene 11 fest angeordneten Bauteilen. Jeweils eine der Rollen des ersten Führungselements 8 greift in eine der Nuten des zweiten Führungselementes 22 ein, so dass das erste Führungselement 8 bei einem Verschieben des ersten Mitnehmers 10 durch das zweite Führungselement 22 geführt wird. Das relativ zur Schiene 11 fest angeordnete zweite Führungselement 22 führt das starr mit der Abdeckung 2 verbundene erste Führungselement 8 entlang einer Bahn, die durch die Form der Nuten des zweiten Führungselements 22 vorgegeben ist. Bei alternativen Ausführungsformen kann das erste Führungselement auch wenigstens eine oder mehrere starr mit der Halterung 4 verbundene Nase bzw. Nasen umfassen, die wie die zuvor beschriebenen Rollen in die Nuten des zweiten Führungselements 22 eingreifen und so in ihrer Bewegung durch die Nuten geführt werden. Wie die zuvor beschriebenen Rollen sind dann auch diese Nasen jeweils von der Drehachse 9 beabstandet.

Fig. 2 zeigt eine perspektivische Ansicht derselben Abdeckeinrichtung 1 in der bereits in Fig. 1 dargestellten geöffneten Stellung. Wiederkehrende Merkmale sind in dieser und den folgenden Figuren mit den gleichen Bezugszeichen versehen. Die Abdeckeinrichtung 1 weist zusätzlich zwei Sensoren 23, 24 auf, die eingerichtet sind, eine Position des ersten Mitnehmers 10 relativ zur Schiene 11 im Bereich des ersten Endes 14 der Schiene 11 und im Bereich des zweiten Endes 16 der Schiene 11 zu erfassen. Die Sensoren 23, 24 können z. B. als optische oder magnetische Sensoren ausgebildet sein.

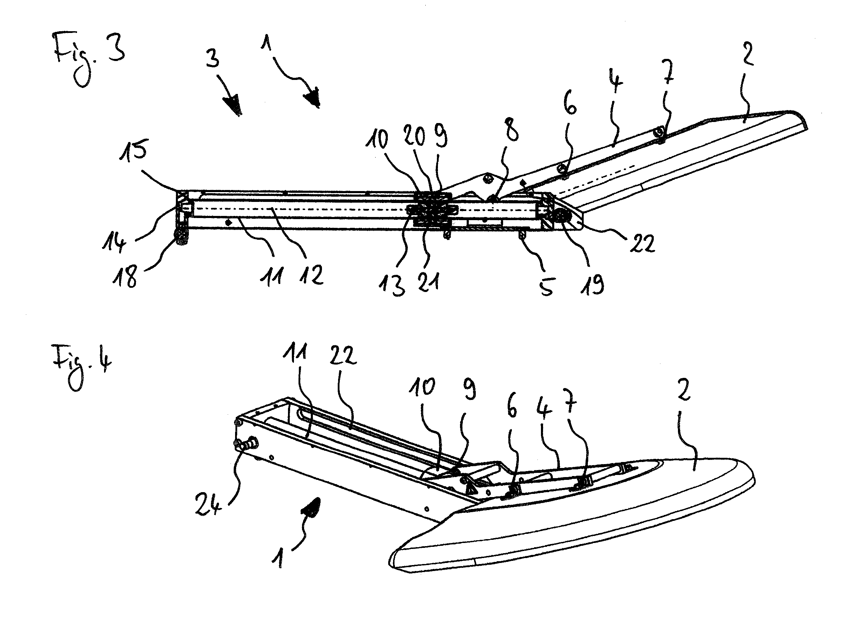

Figuren 3 und 4 zeigen eine Seitenansicht bzw. eine perspektivische Ansicht derselben Abdeckeinrichtung 1 in einer teilweise geöffneten Stellung. Zur Überführung der Abdeckeinrichtung 1 von der in den Figuren 1 und 2 dargestellten geöffneten Stellung in die in den Figuren 3 und 4 dargestellte teilweise geöffnete Stellung wurde der Hohlraum 12 über die Druckluftanschlüsse 18, 19 so mit Druckluft beaufschlagt, dass der zweite Mitnehmer 13 eine Bewegung nach rechts, also in der zweiten Richtung 35 vollführt. Aufgrund der Kopplung der Bewegungen des ersten Mitnehmers 10 und des zweiten Mitnehmers 13 infolge der magnetischen Anziehung zwischen dem ersten Mitnehmer 10 und dem zweiten Mitnehmer 13 vollführt der erste Mitnehmer 10 dann ebenfalls eine Bewegung nach rechts, also in die zweite Richtung 35.

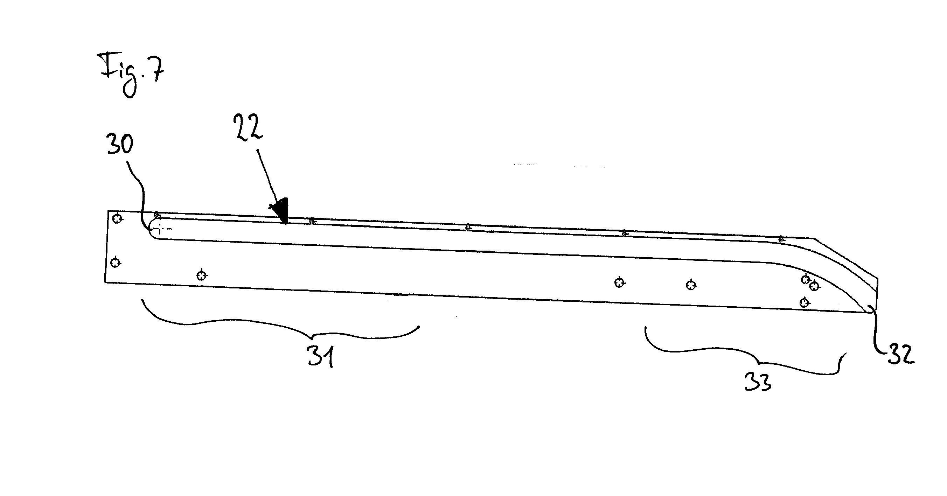

Fig. 7 zeigt eine Seitenansicht des zweiten Führungselements 22. Das zweite Führungselement 22 hat ein erstes Ende 30 und ein zweites Ende 32. Ein erster Abschnitt 31 des zweiten Führungselements 22 schließt sich an das erste Ende 30 des zweiten Führungselements 22 an, und ein zweiter Abschnitt 33 des zweiten Führungselements 22 schließt sich an das zweite Ende 32 des zweiten Führungselements 22 an.

Der erste Abschnitt 31 des zweiten Führungselements 22 ist parallel zur Schiene 11 und damit parallel zur Bewegung des ersten Mitnehmers 10 entlang der Schiene 11 ausgerichtet. Solange das starr mit der Abdeckung 2 verbundene erste Führungselement 8 bei der Bewegung des ersten Mitnehmers 10 entlang der Schiene 11 in dem parallel zur Schiene 11 ausgerichteten ersten Abschnitt 31 des zweiten Führungselements 22 geführt wird, bewegen sich die Drehachse 9, über die die Abdeckung 2 drehbar mit dem ersten Mitnehmer 10 verbunden ist, und das von der Drehachse 9 beabstandete erste Führungselement 8 parallel zueinander, so dass in diesem Abschnitt der Bewegung der Abdeckung 2 keine Rotation der Abdeckung 2 bezüglich der Drehachse 9 stattfindet. Daher vollführen die Halterung 4 und die Abdeckung 2 bei der Überführung der Abdeckeinrichtung 1 von der in den Figuren 1 und 2 gezeigten geöffneten Stellung in die in den Figuren 3 und 4 gezeigte teilweise geöffnete Stellung eine rein translatorische Bewegung.

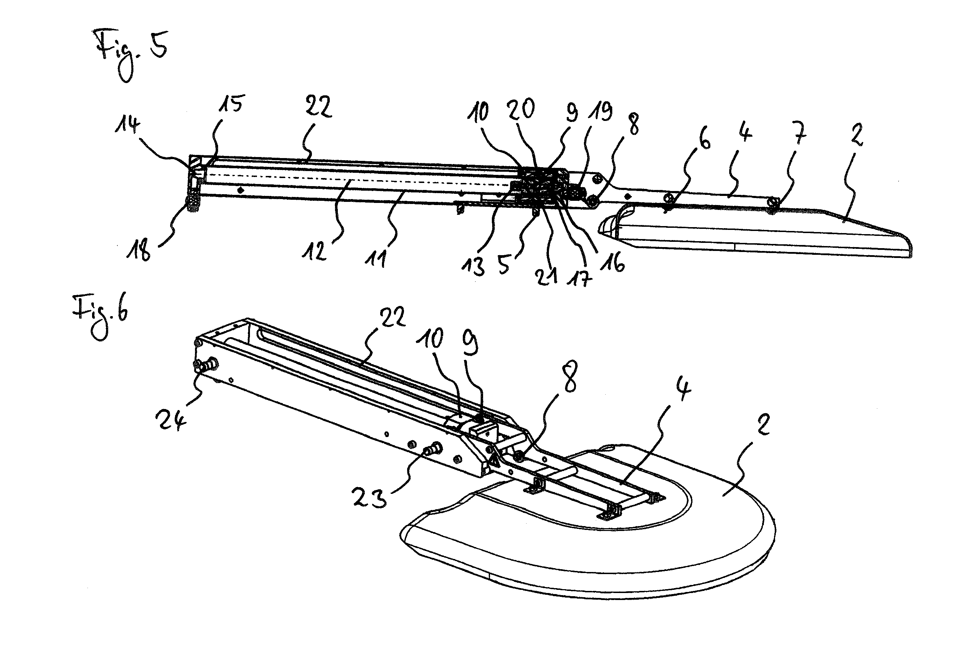

Figuren 5 und 6 zeigen eine Seitenansicht bzw. eine perspektivische Ansicht derselben Abdeckeinrichtung 1 in einer abgedeckten Stellung. Zur Überführung der Abdeckeinrichtung 1 von der in den Figuren 3 und 4 dargestellten teilweise geöffneten Stellung in die in den Figuren 5 und 6 gezeigte abgedeckte Stellung wurde der Hohlraum 12 über die Druckluftanschlüsse 18, 19 weiterhin so mit Druckluft beaufschlagt, dass der zweite Mitnehmer 13 und der erste Mitnehmer 10 eine Bewegung nach rechts vollführen, also in der zweiten Richtung 35 entlang der Schiene 11.

In der in den Figuren 5 und 6 dargestellten abgedeckten Stellung der Abdeckeinrichtung 1 befinden sich sowohl der erste Mitnehmer 10 als auch der zweite Mitnehmer 13 in Berührung mit dem zweiten Anschlag 17, der eine weitere Bewegung des ersten Mitnehmers 10 und des zweiten Mitnehmers 13 in der zweiten Richtung 35 über den zweiten Anschlag 17 hinaus verhindert.

In dem in Fig. 7 gezeigten zweiten Abschnitt 33 des zweiten Führungselements 22 verläuft das zweite Führungselement 22 gekrümmt. Insbesondere verlaufen die Nuten des zweiten Führungselements 22 in diesem zweiten Abschnitt 33 also nicht parallel zur Schiene 11 wie im ersten Abschnitt 31. Dadurch, dass die Nuten des zweiten Führungselements 22 im zweiten Abschnitt 32 gekrümmt verlaufen, werden die in die Nuten des zweiten Führungselements 22 eingreifenden Rollen des ersten Führungselements 8 im zweiten Abschnitt 32 des zweiten Führungselements 22 derart geführt, dass die relativ zur Abdeckung 2 fest angeordneten Rollen und die von den Rollen beabstandete Drehachse 9, über die die Abdeckung 2 drehbar mit dem ersten Mitnehmer 10 verbunden ist, bei einer Überführung der Abdeckeinrichtung 1 von der in den Figuren 3 und 4 gezeigten teilweise geöffneten Stellung in die in den Figuren 5 und 6 gezeigte abgedeckte Stellung eine unterschiedliche Wegstrecke durchlaufen. Dadurch vollführt die Abdeckung 2 zusätzlich zur translatorischen Bewegung eine Rotationsbewegung bezüglich der Drehachse 9.

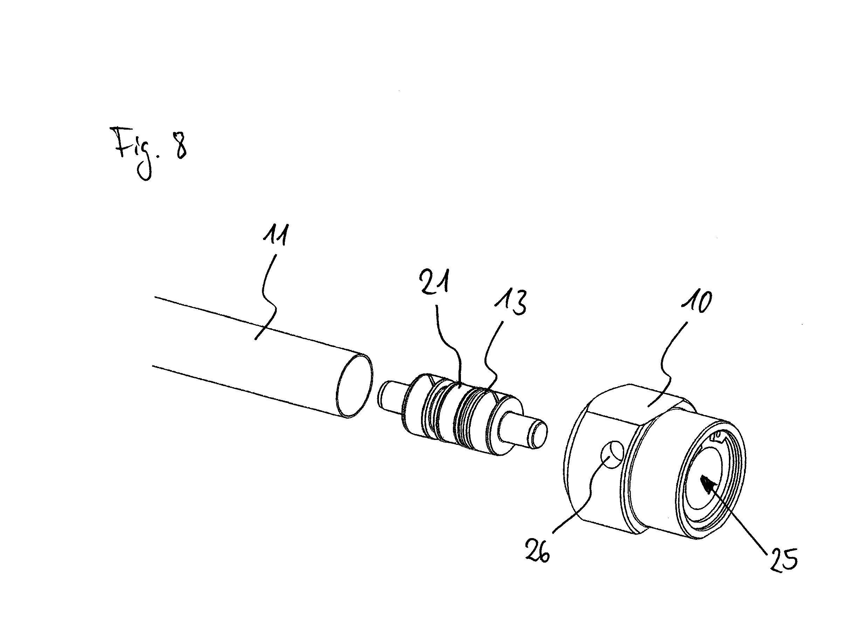

Fig. 8 zeigt eine Explosionszeichnung der Schiene 11, des ersten Mitnehmers 10 und des zweiten Mitnehmers 13. Der zweite Mitnehmer 13 weist im Wesentlichen die Form eines Kolbens auf. Die Schiene 11 ist in Form eines Rohres mit rundem Querschnitt ausgeführt. Ein äußerer Durchmesser des zweiten Mitnehmers 13 ist nur geringfügig kleiner als ein Innendurchmesser des Rohres, so dass der zweite Mitnehmer 13 in dem Hohlraum 12 der Schiene 11 entlang der Längsrichtung der Schiene 11 geführt werden kann. Der erste Mitnehmer 10 hat die Form eines Ringes mit einer runden Aussparung 25 mit einem Durchmesser, der nur geringfügig größer ist als ein äußerer Durchmesser der Schiene 11. Somit kann der erste Mitnehmer 10 sicher auf der Schiene 11 geführt werden. Zusätzlich weist der erste Mitnehmer 10 eine Aufnahme 26 zum Befestigen der Halterung 4 auf. Durch die Aufnahme 26 verläuft die Drehachse 9 der Abdeckeinrichtung 1.

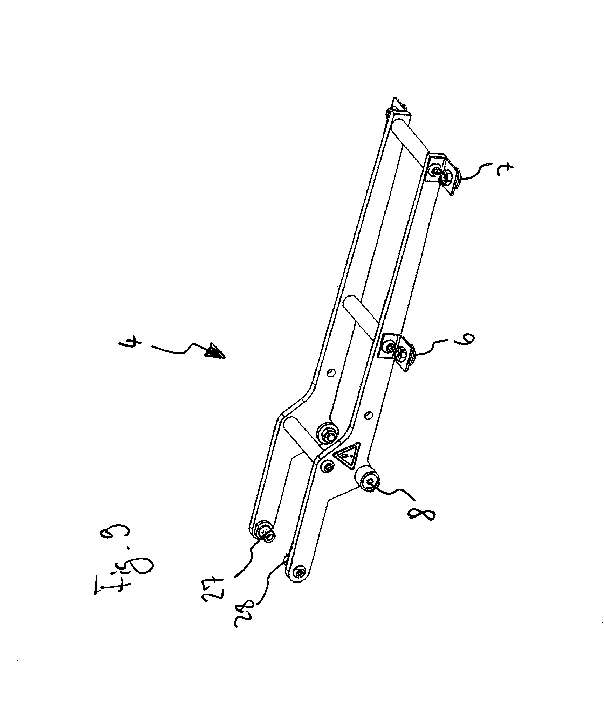

Eine perspektivische Ansicht der Halterung 4 der Abdeckeinrichtung 1 ist in Fig. 9 dargestellt. Die Halterung 4 umfasst Verbindungsmittel 27, 28, die eingerichtet sind, in die Aufnahme 26 des ersten Mitnehmers zu greifen zum drehbaren Verbinden der Halterung 4 mit dem ersten Mitnehmer 10.

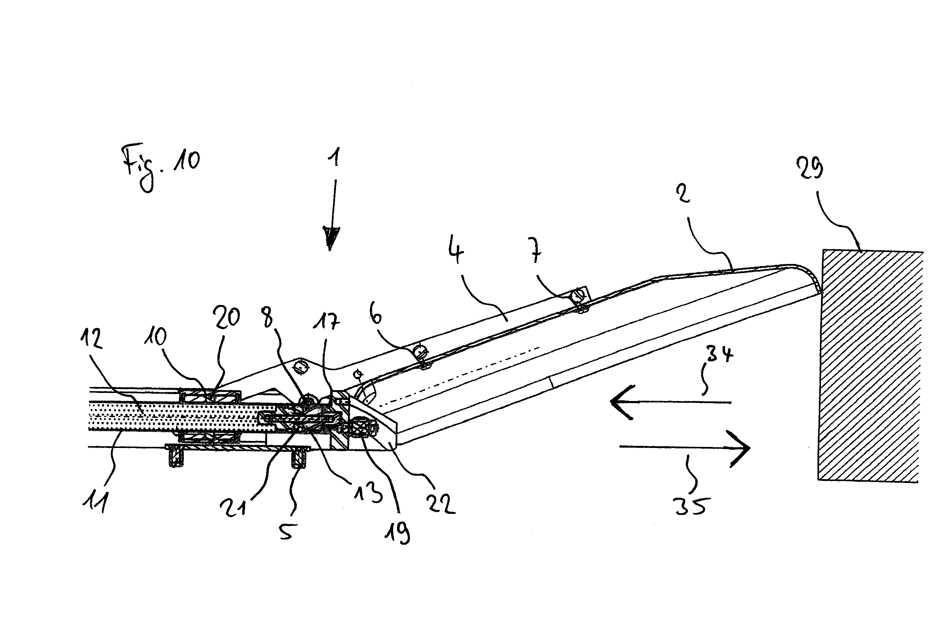

Fig. 10 zeigt eine Seitenansicht derselben Abdeckeinrichtung 1 und ein Hindernis 29. Die dargestellte Abdeckeinrichtung 1 befindet sich in Fig. 10 in einer teilweise geöffneten Stellung in einem Moment, nachdem die Abdeckung 2 während eines unvollständigen Schließvorgangs gegen ein Hindernis 29 gestoßen ist. Das Hindernis 29 blockiert ein weiteres Verschieben des ersten Mitnehmers 10 in die zweite Richtung 35 während eines Zusammenstoßes zwischen dem Hindernis 29 und der Abdeckung 2. Der durch Druckluft angetriebene zweite Mitnehmer 13 im Hohlraum 12 der Schiene 11 ist nach dem Zusammenstoß durch eine Entkopplung der Bewegungen des ersten Mitnehmers 10 und des zweiten Mitnehmers 13 jedoch weiterhin verschiebbar. Somit vollführt der zweite Mitnehmer 13 nach dem Zusammenstoß eine Bewegung in der zweiten Richtung 35 bis zum zweiten Anschlag 17, mit dem der zweite Mitnehmer 13 in Fig. 10 in Berührung ist. In dem in Fig. 10 dargestellten Zustand der Abdeckeinrichtung 1 wird der Hohlraum 12 weiterhin mit Druckluft beaufschlagt, was jedoch durch die Entkopplung der Bewegungen des ersten Mitnehmers 10 und des zweiten Mitnehmers 13 keine Kraft auf die Abdeckung 2 nach rechts ausübt, so dass ein Schaden an der Abdeckung 2 und an dem Hindernis 29 begrenzt wird.

Eine Werkzeugablagestation kann neben einer Abdeckeinrichtung 1 auch eine Aufnahme für Werkzeug umfassen. Die Abdeckeinrichtung 1 lässt sich mit dem Befestigungsmittel 5 so an der Aufnahme der Werkzeugablagestation befestigen, dass die Abdeckung 2 in der abgedeckten Stellung der Abdeckeinrichtung 1 in der Aufnahme der Werkzeugablagestation befindliches Werkzeug vor Staub schützt. In der geöffneten Stellung der Abdeckeinrichtung 1 ist das Werkzeug für einen Industrieroboter von oben zugänglich und kann von diesem aufgenommen werden.

## Patentansprüche

1. Abdeckeinrichtung (1) für eine Werkzeugablagestation, umfassend eine Abdeckung (2) sowie eine Vorrichtung (3) zum Bewegen der Abdeckung (2),
**dadurch gekennzeichnet, dass**
die Vorrichtung (3) eine Schiene (11) und einen durch die Schiene (11) geführten und entlang der Schiene (11) verschiebbaren ersten Mitnehmer (10) aufweist, der mit der Abdeckung (2) verbunden ist, wobei die Abdeckeinrichtung (1) durch ein Verschieben des ersten Mitnehmers (10) in eine erste Richtung (34) entlang der Schiene (11) in eine geöffnete Stellung überführbar ist und wobei die Abdeckeinrichtung (1) durch ein Verschieben des ersten Mitnehmers (10) in eine der ersten Richtung (34) entgegengesetzte zweite Richtung (35) entlang der Schiene (11) in eine abgedeckte Stellung überführbar ist, wobei die Vorrichtung (3) derart ausgebildet ist, dass das Verschieben des ersten Mitnehmers (10) eine zumindest teilweise translatorische Bewegung der Abdeckung (2) bewirkt.

2. Abdeckeinrichtung (1) nach Anspruch 1, **gekennzeichnet durch** ein starr mit der Abdeckung (2) verbundenes erstes Führungselement (8), wobei die Abdeckung (2) um eine von dem ersten Führungselement (8) beabstandete Drehachse (9) drehbar mit dem ersten Mitnehmer (10) verbunden ist und wobei die Vorrichtung (3) zum Bewegen der Abdeckung (2) ein zweites Führungselement (22) in Eingriff mit dem ersten Führungselement (8) aufweist, wobei das erste (8) und das zweite Führungselement (22) derart ausgebildet und angeordnet sind, dass die Abdeckung (2) **durch** das Verschieben des ersten Mitnehmers (22) um die Drehachse (9) drehbar ist.

3. Abdeckeinrichtung (1) nach Anspruch 2, **dadurch gekennzeichnet, dass** das zweite Führungselement (22) als Nut ausgebildet ist.

4. Abdeckeinrichtung (1) nach einem der Ansprüche 2 bis 3, **dadurch gekennzeichnet, dass** das erste Führungselement (8) als Nase ausgebildet ist.

5. Abdeckeinrichtung (1) nach einem der Ansprüche 2 bis 3, **dadurch gekennzeichnet, dass** das erste Führungselement (8) als Rolle ausgebildet ist oder eine Rolle umfasst.

6. Abdeckeinrichtung (1) nach einem der Ansprüche 1 bis 5, **dadurch gekennzeichnet, dass** die Schiene (11) einen sich entlang einer Längsrichtung der Schiene (11) erstreckenden Hohlraum (12) und einen in dem Hohlraum (12) geführten und entlang der Längsrichtung der Schiene (11) verschiebbaren zweiten Mitnehmer (13) aufweist, wobei der erste Mitnehmer (10) und der zweite Mitnehmer (13) derart gekoppelt sind oder koppelbar sind, dass der erste Mitnehmer (10) durch das Verschieben des zweiten Mitnehmers (13) verschiebbar ist.

7. Abdeckeinrichtung (1) nach Anspruch 6, **dadurch gekennzeichnet, dass** die Schiene (11) mindestens einen Druckluftanschluss (18, 19) zum Beaufschlagen des Hohlraumes (12) mit einem Überdruck oder mit einem Unterdruck aufweist, wobei der Hohlraum (12) und der zweite Mitnehmer (13) derart ausgebildet sind und der zweite Mitnehmer (13) derart im Hohlraum (12) geführt ist, dass der zweite Mitnehmer (13) durch ein Beaufschlagen des Hohlraumes (12) mit einem Überdruck oder mit einem Unterdruck innerhalb des Hohlraumes (12) verschiebbar ist.

8. Abdeckeinrichtung (1) nach einem der Ansprüche 6 oder 7, **dadurch gekennzeichnet, dass** der erste Mitnehmer (10) und der zweite Mitnehmer (13) derart ausgebildet sind, dass der erste Mitnehmer (10) und der zweite Mitnehmer (13) über eine magnetische Kraft gekoppelt sind oder koppelbar sind.

9. Abdeckeinrichtung (1) nach einem der Ansprüche 6 bis 8, **dadurch gekennzeichnet, dass** der erste Mitnehmer (10) und der zweite Mitnehmer (13) derart ausgebildet sind, dass der erste Mitnehmer (10) und der zweite Mitnehmer (13) durch eine Krafteinwirkung auf den ersten Mitnehmer (10) oder auf die Abdeckung (2) entkoppelbar sind.

10. Abdeckeinrichtung (1) nach einem der Ansprüche 6 bis 9, **dadurch gekennzeichnet, dass** die Schiene (11) in Form eines Rohres mit rundem Querschnitt und der zweite Mitnehmer (13) in Form eines in dem Rohr geführten Zylinders ausgeführt ist.

11. Abdeckeinrichtung (1) nach einem der Ansprüche 1 bis 10, **gekennzeichnet durch** mindestens einen Sensor (23, 24), der eingerichtet ist, mindestens eine Position des ersten Mitnehmers (10) relativ zur Schiene (11) zu erfassen.

12. Werkzeugablagestation mit mindestens einer Aufnahme zum Aufnehmen eines Werkzeugs, insbesondere zum Aufnehmen eines Werkzeugs durch einen Industrieroboter, und mit mindestens einer Abdeckeinrichtung (1) nach einem der Ansprüche 1 bis 11.
